# DEMANDE DE BREVET EUROPEEN

(11) **EP 1 557 592 A1**
(43) Date de publication de la demande: **27.07.2005**
(21) Numéro de dépôt: 05300049.3
(22) Date de dépôt: 21.01.2005
(51) Int. Cl.: F16H 61/24

(54) **DISPOSITIF D'ACCOMPAGNEMENT DE PASSAGE DE VITESSES DANS UNE BOITE DE VITESSES MECANIQUE D'UN VEHICULE**

(30) Priorité: 21.01.2004 FR 0400758
(71) Demandeur: Dura Automotive Systems, 91924 Bondoufle (FR)
(72) Inventeur: MAITRE, SEBASTIEN, 43120, MONISTROL SUR LOIRE (FR)
(74) Mandataire: Thivillier, Patrick

(57) **Abrégé**

Ce dispositif est remarquable en ce que :
- ledit bras (1) est articulé sur un axe (3) disposé sensiblement dans la partie médiane de sa longueur pour délimiter une zone d'accouplement (1a) à la commande de vitesse et une zone (1b) présentant des agencements d'entraînement en rotation de la masse d'inertie (2), de sorte que, sous l'effet d'entraînement angulaire dudit levier, ladite masse tourne très vite en augmentant l'effet d'inertie pour accompagner le mouvement d'entraînement et de passage ;
- les agencements d'entraînement sont constitués par un secteur cranté (1b1) formé dans l'épaisseur du bras et coopérant en position d'engrènement avec un pignon (6) solidaire d'un axe (7) d'entraînement en rotation de la masse (2) ;
- l'axe de rotation (3) du bras (1), l'élément (1b) constituant la zone d'entraînement de la masse d'inertie (2), la masse d'inertie (2) et son pignon d'entraînement (6) solidaires de l'axe (7), sont montés libres en rotation, d'une manière étanche, dans un carter (4) présentant des agencements de fixation avec la commande interne de la boîte de vitesses.

## Description

L'invention se rattache au secteur technique des équipements pour véhicules automobiles et plus particulièrement au dispositif pour le passage des rapports de vitesses dans une boîte de vitesses, notamment mécanique.

On rappelle, d'une manière connue, qu'un ensemble de commande de boîte de vitesses mécanique comprend un boîtier support fixé généralement au niveau du plancher du véhicule automobile pour recevoir, avec capacité de déplacement angulaire, un levier. Le levier est accouplé, notamment au niveau de sa partie inférieure, aux éléments de commande interne de la boîte de vitesses au moyen généralement de câbles différents aptes à assurer, d'une part, le passage de vitesse et, d'autre part, la sélection des vitesses.

On a proposé également de monter, entre le câble de passage et la commande interne de la boîte de vitesses, une masse d'inertie pour agrémenter le passage des vitesses. Cette masse représente un poids et un volume importants.

Cette solution technique ne donne pas totalement satisfaction, tant au niveau des moyens de mise en oeuvre que des résultats obtenus.

L'invention s'est fixée pour but de remédier à ces inconvénients, de manière simple, sûre, efficace et rationnelle.

Le problème que se propose de résoudre l'invention est de pouvoir amplifier l'effet d'inertie recherché pour faciliter et accompagner le passage des vitesses dans un encombrement réduit, avec un poids réduit, tout en ayant pour objectif de proposer un ensemble indépendant apte à être rapporté et intégré au niveau de la boîte de vitesses.

Pour résoudre un tel problème et atteindre cet objectif, il a été conçu et mis au point un dispositif conforme aux caractéristiques de la revendication 1.

Compte tenu de ces dispositions, il en résulte que, sous l'effet du bras de levier, la masse tourne très vite en augmentant par conséquent l'effet d'inertie recherché.

Le secteur est délimité par un angle au centre dont le sommet correspond à l'axe de rotation du bras.

Dans une forme de réalisation avantageuse, la zone d'accouplement du bras et la zone d'entraînement de la masse d'inertie, sont constituées par deux éléments distincts rendus solidaires de l'axe de rotation dudit bras.

Avantageusement, la zone d'accouplement du bras est constituée par des agencements du type à rotule.

L'invention est exposée ci-après plus en détail à l'aide des figures des dessins annexés dans lesquels :

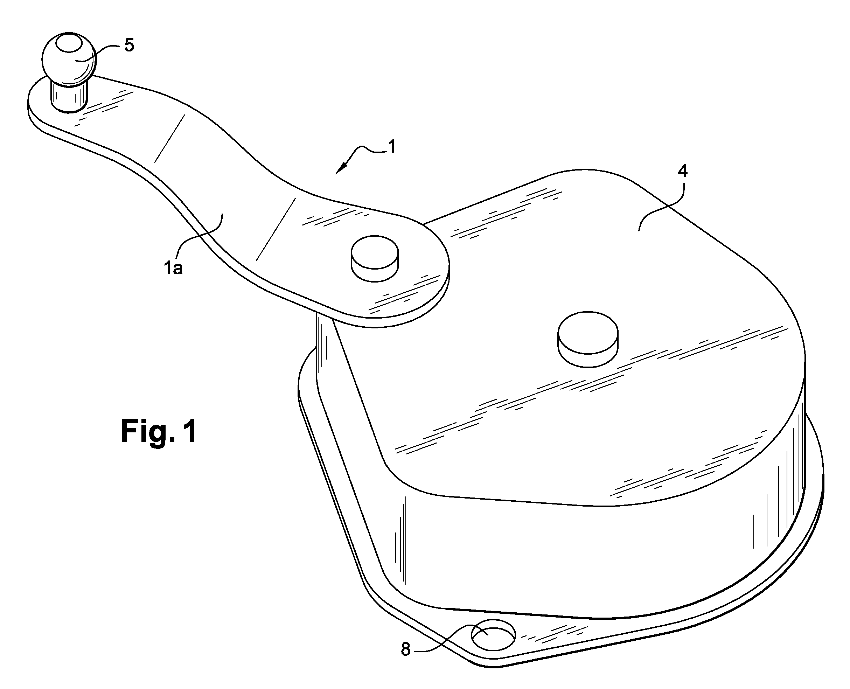

- la figure 1 est une vue en perspective d'une forme de réalisation du dispositif ;

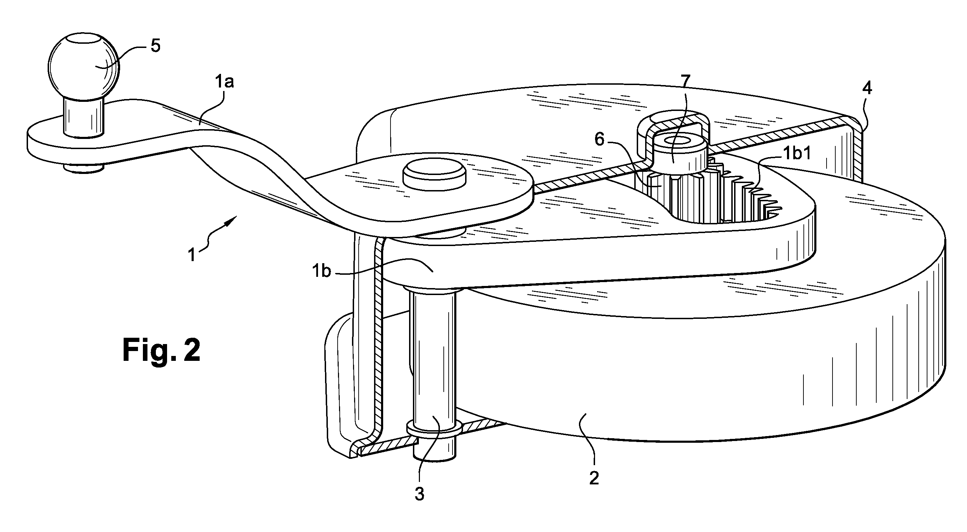

- la figure 2 est une vue en perspective, avec coupe partielle, du dispositif;

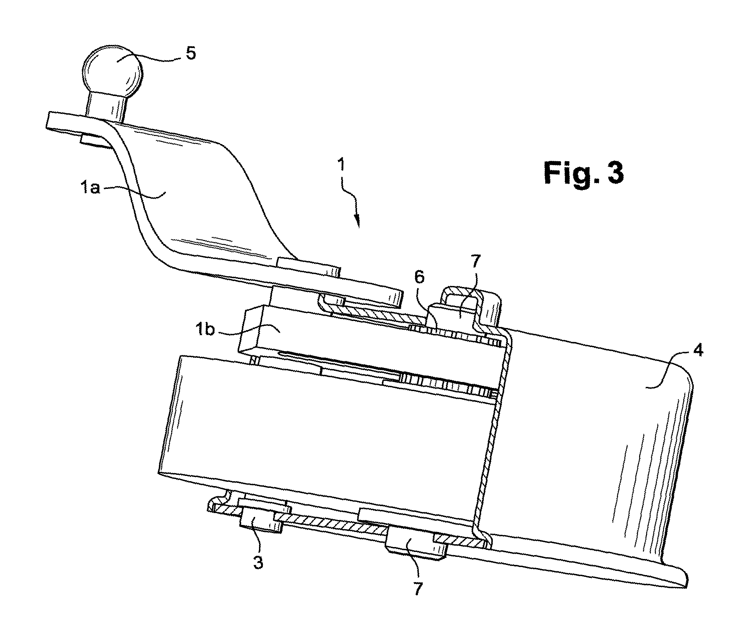

- la figure 3 est une autre vue en perspective du dispositif avec coupe partielle ;
- la figure 4 est une vue en coupe longitudinale du dispositif;

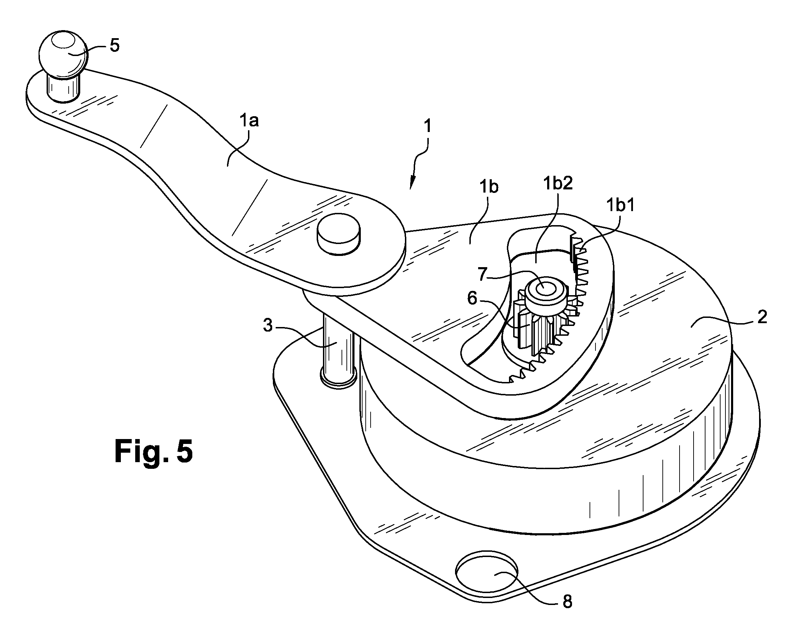

- la figure 5 est une vue en perspective du dispositif, le carter de protection n'étant pas représenté.

On rappelle que le dispositif est monté entre la commande de vitesses, par exemple le câble notamment, assujetti à un levier de manoeuvre et de passage de vitesses, et la commande interne de la boîte de vitesses mécanique.

Pour l'essentiel, le dispositif selon l'invention comprend un bras articulé (1) agencé pour permettre l'accouplement du câble de passage et entraîner, à vitesse importante, une masse d'inertie (2) apte à transmettre un mouvement d'accélération au niveau dudit bras pour faciliter le passage des vitesses. Le bras articulé (1) est solidaire d'un axe vertical de rotation (3) monté dans un boîtier (4) faisant office de carter de protection.

L'axe d'entraînement (3) est disposé sur une partie de la longueur du bras articulé (1), sensiblement dans sa partie médiane. Il en résulte que l'axe de rotation (3) délimite une zone d'accouplement (1a) avec le câble de passage et une zone d'entraînement (1b) présentant des agencements d'entraînement en rotation de la masse d'inertie (2). Avantageusement, la zone d'accouplement (1a) et la zone d'entraînement (1b), sont constituées par deux éléments distincts rendus solidaires de l'axe de rotation (3). Les éléments (1a) et (1b) sont disposés en alignement coaxial.

L'élément (1a) se présente, par exemple, sous forme d'un levier coudé présentant, à son extrémité libre opposée à celle solidaire de l'axe de rotation (3), des agencements d'accouplement, sous forme notamment d'une rotule (5), au câble de passage (non représenté).

L'élément (1b), solidaire de l'axe de rotation (3), est constitué par un secteur cranté (1b1) par exemple sous forme d'une lumière (1b2) formée dans l'épaisseur de l'élément (1b) du bras (1). Ce secteur cranté (1b1) coopère, en position d'entraînement, avec un pignon (6) solidaire d'un axe (7) d'entraînement en rotation de la masse d'inertie (2).

Le secteur est délimité par un angle au centre dont le sommet correspond à l'axe de rotation (3).

L'arbre (7) est également monté libre en rotation dans le carter (4). Les deux axes (3) et (7) sont parallèles et disposés, de préférence, dans un plan vertical.

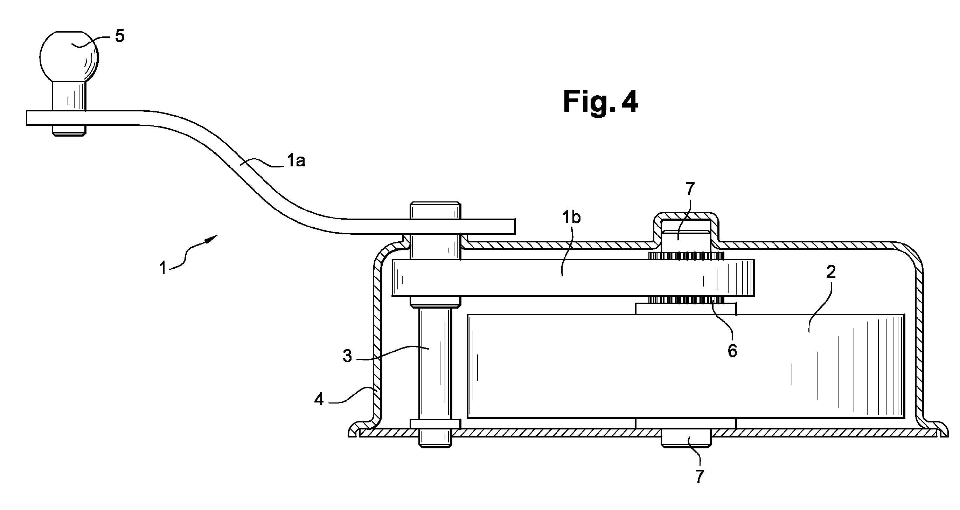

Comme le montre notamment la figure 4, l'axe de rotation en entraînement (3) du bras (1), l'élément en secteur (1b), la masse d'inertie (2) et son pignon d'entraînement (6) solidaires de l'axe (7), sont montés libres en rotation, de manière étanche, à l'intérieur du carter (4). Le carter (4) présente des agencements de fixation (8) à la boîte de vitesse.

Compte tenu des caractéristiques à la base de l'invention, il en résulte que l'entraînement angulaire du levier (1) par rapport à l'axe (3), selon les flèches F1 ou F2, provoque, d'une manière concomitante, par le secteur cranté (1b1), l'entraînement du pignon (6) et par conséquent la masse d'inertie (2).

Compte tenu du rapport de multiplication entre le secteur denté (1b1) et le pignon d'entraînement (6), d'une part, et de la masse d'inertie (2), d'autre part, un faible déplacement angulaire du secteur cranté (1b1), génère une vitesse de rotation élevée au niveau du pignon (6) et de la masse d'inertie (2) et, d'une manière concomitante, un effet d'accélération et d'accompagnement du mouvement de déplacement angulaire dudit levier (1).

A titre indicatif, nullement limitatif, le rapport d'engrènement entre le pignon (6) et le secteur denté (1b1) est de 100/10, tandis que le diamètre primitif du pignon (6) est de l'ordre de 9 mm , et le diamètre de la masse d'inertie (2) de l'ordre de 60 mm.

Les avantages ressortent bien de la description.

## Revendications

1. Dispositif d'accompagnement de passage des vitesses dans une boîte de vitesses mécanique d'un véhicule, le dispositif étant monté entre une commande de vitesses et la commande interne de la boîte de vitesses et comprend un bras de levier (1) agencé pour assurer l'entraînement en rotation, à une vitesse importante, d'une masse (2), **caractérisé en ce que** :
- ledit bras (1) est articulé sur un axe (3) disposé sensiblement dans la partie médiane de sa longueur pour délimiter une zone d'accouplement (1a) à la commande de vitesse et une zone (1b) présentant des agencements d'entraînement en rotation de la masse d'inertie (2), de sorte que, sous l'effet d'entraînement angulaire dudit levier, ladite masse tourne très vite en augmentant l'effet d'inertie pour accompagner le mouvement d'entraînement et de passage ;
- les agencements d'entraînement sont constitués par un secteur cranté (1b1) formé dans l'épaisseur du bras et coopérant en position d'engrènement avec un pignon (6) solidaire d'un axe (7) d'entraînement en rotation de la masse (2) ;
- l'axe de rotation (3) du bras (1), l'élément (1b) constituant la zone d'entraînement de la masse d'inertie (2), la masse d'inertie (2) et son pignon d'entraînement (6) solidaires de l'axe (7), sont montés libres en rotation, d'une manière étanche, dans un carter (4) présentant des agencements de fixation avec la commande interne de la boîte de vitesses.

2. Dispositif selon la revendication 1, **caractérisé en ce que** le secteur est délimité par un angle au centre dont le sommet correspond à l'axe de rotation (3) du bras (1).

3. Dispositif selon la revendication 1, **caractérisé en ce que** la zone d'accouplement (1a) du bras et la zone d'entraînement (1b) de la masse d'inertie (2), sont constituées par deux éléments distincts rendus solidaires de l'axe de rotation (3).

4. Dispositif selon la revendication 1, **caractérisé en ce que** la zone d'accouplement (1a) du bras est constituée par des agencements du type à rotule (5).
